# EUROPEAN PATENT SPECIFICATION

(11) **EP 3 338 377 B1**
(45) Date of publication and mention of the grant of the patent: **16.06.2021**
(21) Application number: 16751290.4
(22) Date of filing: 12.08.2016
(51) Int. Cl.: H04B 7/08

(54) **METHOD OF SELECTING OPERATION ANTENNAS IN A RECEIVER, COMMUNICATION DEVICE AND COMPUTER PROGRAM**
VERFAHREN ZUR AUSWAHL VON BETRIEBSANTENNEN BEI EINEM EMPFÄNGER, KOMMUNIKATIONSVORRICHTUNG UND COMPUTERPROGRAMM
PROCÉDÉ DE SÉLECTION D'ANTENNES OPÉRATIONNELLES DANS UN RÉCEPTEUR, DISPOSITIF DE COMMUNICATION, ET PROGRAMME D'ORDINATEUR

(30) Priority: 17.08.2015 US 201562206060 P
(43) Date of publication of application: 27.06.2018
(73) Proprietor: Telefonaktiebolaget LM Ericsson (PUBL), 164 83 Stockholm (SE)
(72) Inventor: PALENIUS, Torgny, SE-246 57 Barsebäck (SE); CALLENDER, Christopher, Cleish Kinross KY13 0LW (GB); CHEN, Maomao, SE-232 36 Arlöv (SE)
(74) Representative: Ericsson
(86) International application number: PCT/EP2016/069205
(87) International publication number: WO 2017/029207

(56) References cited:
- US-A1- 2011 105 049
- US-A1- 2011 306 371
- US-A1- 2014 307 837

## Description

### Technical field

The present invention generally relates to a multiple input receiver having a plurality of antennas connected to respective antenna ports of the receiver, a method of selecting operation antennas in the receiver, a communication device comprising such a receiver and a computer program for implementing the method in the receiver.

### Background

In a typical radio communications network, communication devices, also known as mobile stations and/or user equipment (UEs), communicate via a Radio Access Network (RAN) to one or more core networks. The radio access network covers a geographical area which is divided into cell areas, with each cell area being served by a base station, e.g., a radio base station (RBS), which in some networks may also be called, for example, a "NodeB" or "eNodeB". A cell is a geographical area where radio coverage is provided by the radio base station at a base station site or an antenna site in case the antenna and the radio base station are not collocated. Each cell is identified by an identity within the local radio area, which is broadcast in the cell. Another identity identifying the cell uniquely in the whole mobile network is also broadcasted in the cell. One base station may have one or more cells. A cell may be downlink and/or uplink cell. The base stations communicate over the air interface operating on radio frequencies with the UEs within range of the base stations.

An array of antenna elements may be provided at both the transmitter at the base station and the receiver of the communication device. There exist a number of potential physical arrangements for an antenna array, which include, but are not limited to, uniform linear, matrix and circular. Typically, cross polarized arrangements are deployed with an antenna element for each polarization.

The use of the antenna array may provide capacity gains and user equipment gains, e.g. in the form of Multiple-Input Multiple-Output (MIMO). An objective of these features is to increase the average spectral efficiency. One possible technique for improving downlink spectral efficiency is to introduce support for multiple antennas employed at the transmitter and the receiver. For example, a four branch MIMO (multiple input multiple output) can utilize up to four Tx (transmit) and Rx (receive) antennas to enhance spatial multiplexing gains and to offer improved beamforming capabilities. For example, a four branch MIMO may provide up to 84 Mbps per 5 MHz carrier for high SNR (signal-to-noise ratio) users and may improve coverage for low SNR users.

Receiver performance for UEs with 4 Rx antennas is discussed in "LTE DL 4 Rx antenna ports", which is a work item description for 3GPP meeting #67 of TSG RAN with reference No RP-150427. 4 receivers are needed to be able to support 4 Layers single user MIMO, where 4 different data layers can be transmitted to the UE simultaneously increasing the maximum data throughput to one UE. With 4 Rx antenna ports a 4x4 MIMO system supports up to four-layer spatial multiplexing, and an 8x4 MIMO system with four-layer spatial multiplexing is capable of utilizing both beam forming and diversity gain. These layers can be combined through dynamic beamforming and MIMO receiver processing to increase reliability and range. From a performance point of view, the use of 4 Rx antenna ports allows higher UE data rates in a wide range of scenarios and improved receiver sensitivity in general. Depending on the target SNR region, the transmission scheme used in the eNodeB and the channel conditions, the peak throughput may be doubled compared with dual-layer multiplexing by virtue of additional diversity gain and/or multiplexing gain. The 4 Rx capability is also important to improve the link performance by Rx Diversity when only one or two data layers are transmitted. Then, in case of fading, the performance of a UE using 4 receivers can improve the link performance substantially. Due to that, the UE can receive a much higher data rate with 4 receivers than with 2 receivers. There are however cases where the gain is very small or none.

US application No 62/145,876 discloses an approach for a network node and a communication device where the network node generates configuration information that configures an extent to which the communication device adapts the number of receiver components that the communication device uses under different possible defined conditions and sends the configuration information to the communication device. The communication device receives the configuration information and autonomously adapts the number of receiver components accordingly.

US application No 62/109,300 discloses an approach where a UE obtains information whether receive antennas are configured as a linear array or cross polarized, determines a correlation and power imbalance among the receive antennas, and transmits information about all this to the network. A network node receives the information and utilizes it for performing one or more radio operational or radio resource management tasks.

US 2014/0307837 A1 discloses selection of antennas in a context where more antennas than receivers are provided and a multiplexer arrangement is provided between the antennas and the receiver.

US 2011/0306371 A1 discloses an approach where a correlation determination unit determines the degree of correlation based on differences in the times of each antenna detected. If a time when the value indicating the reception quality is deteriorated by the predetermined value or more is detected in one antenna immediately after detection of the time of deterioration in another antenna, the degree of correlation becomes high if a difference in the times is small. If the difference from the time when the value indicating the reception quality is deteriorated by the predetermined value or more in the other antenna is large, the degree of correlation becomes low.

The power consumption of a mobile phone is very important since the battery is limiting how often the mobile phone needs to be recharged. Complexity implied by the features demonstrated above may increase power consumption. It is therefore a desire to provide an approach for balancing power consumption and performance.

### Summary

The invention is based on the understanding that fewer antenna ports used may require less power at the moment, but more antenna ports used may provide a performance gain that is so significant that the overall energy consumption for an amount of data is lower, or not. The inventors have found that the selection of the number of antenna ports used for reception may be adapted based on an evaluation to improve operation in sense of balancing performance and energy consumption.

The invention is set out in the independent claims whereas preferred embodiments are outlined in the dependent claims.

### Brief description of the drawings

The above, as well as additional objects, features and advantages of the present invention, will be better understood through the following illustrative and non-limiting detailed description of preferred embodiments of the present invention, with reference to the appended drawings.

The invention is defined by the appended claims.
Fig. 1 is a flow chart illustrating methods according to embodiments.
Fig. 2 is a block diagram schematically illustrating a receiver arrangement according to an embodiment.
Fig. 3 schematically illustrates a computer-readable medium and a processing device.

### Detailed description

Consider a receiver arrangement, e.g. of a UE, having 4 available radio receivers with antennas connected to respective antenna port. In the following, for the sake of brevity, the expressions "antennas", "antenna ports" and "receivers (Rx)" are used interchangeably when referring to the number of elements used in different configurations and all refer to elements enabling the number of layers that are used or possible to use for improving spectral efficiency and/or coverage as demonstrated in the background section. The 4 radio receivers consume higher power than the UE with 2 radio receivers, respectively when operating. For example, when there is a big gain in the available data throughput when using 4 receivers, the 4 UE receivers can be turned on during a shorter period than if only 2 receivers are used to receive the same amount of data. The energy needed to download a certain amount of data can then actually be decreased by using 4 receivers instead of 2 receivers due to higher user throughput. That can either be achieved by using MIMO with more layers or by improved performance due to Rx Diversity on one layer which leads for example to fewer Hybrid Automatic ReQuest, HARQ, retransmissions. Simultaneously the capacity in the Network is improved by the same amount.

In the cases when the gain in throughput or capacity is small the power consumption from the 4 receivers will not improve anything, it will only decrease the time until a recharge is needed. Then it is an advantage to provide a fallback to 2 receivers.

Except from increasing the data throughput, the coverage of Downlink, DL, (from base station to the mobile phone) can also be improved. The coverage of the connection between the base station and the mobile phone is evaluated according to the thresholds specified for the radio link monitoring (RLM). In fading conditions, the performance of the data-channel can be improved as indicated above, as well as the control channels, and that can be used also to increase the coverage in these cases.

As discussed in the example above, it is allowed to fall back from 4 receivers to 2 receivers when the performance gain with 4 receivers is limited, meaning that DL throughput when 2 receivers are used is not decreased very much compared with 4 receivers. That is, in such case it is advantageous to use only 2 receivers. When the UE selects which 2 antenna ports to be activated for reception in the network, the UE performance is dependent on which 2 antennas it selects. As understood from the example, this also applies for implementations with more than 4 antenna ports where a fallback with fewer antenna ports is desired to be used to save energy.

Here it can be noted that if choosing to select only one antenna, the UE can select the one giving the highest signal level (RSRP, RSRQ for LTE) from the serving cell. That will likely give the best performance. The reason for choosing only one antenna port is that if the antennas are correlated, no significant performance gain is likely to be achieved by using several antennas, and if they have equal received power it does not matter which one is selected. One example is when 2 receivers are available, and the fallback then is using only one receiver. For utilizing the option of performing selection also based on received signal strengths of the antenna ports, the option of determining received signal strengths may be provided.

For a mobile phone with more than 2 receivers, e.g. 4 receivers, it is not necessarily given that best performance is given by the two receivers with max received signal from the serving cell. The performance is also depending on the correlation of the fading of the received signals between the antennas that are used. The best performance may be given by a combination of the correlation and the received power. For example, if the two antennas that have the longest distance between each other have a lower correlation than two antennas that are placed close to each other, it is likely that selection of the two antennas that have the longest distance between each other provides the better performance. Also, if cross polarized antennas are used, the correlation between the polarized antennas may be better than two antennas on a mobile phone that are separated in a linear array.

The existing implementations of 2RX LTE UE already estimate the correlation matrix between antennas when demodulating the signal.

For example, when 4 receivers are used and the mobile phone is considering changing from 4 Rx to 2Rx, the two antennas ports of the four ports that shall be used must be selected. Based on the correlation between the antennas and on the signal level on each antenna the antennas to be activated for reception can be selected. Thereby e.g. when the antennas are pairwise completely correlated the best performance will be achieved by selecting two antennas that have low correlation even if the received signal is different. This is due to the aggregate information provided by those two less correlated antennas is larger than aggregate information provided by two more correlated antennas.

When, after some time with 2Rx used, the correlation between the antennas may have changed substantially, the UE will switch on all 4 antennas for some time to investigate again if using all 4 antennas gives an improved performance, if the number of layers (rank) has increased or the 4Rx diversity gives a better performance than 2Rx, and otherwise check which combination of 2 antennas gives the best performance. In this context, the term "performance" may not only be performance at the moment but may include a judgment based on how much resources that is likely to be spent on a certain amount of data. Thus, a significantly better performance at the moment when using the higher number of receivers than if using the lower number of receivers provides for selection of the higher number of receivers, while a performance then is only slightly better when using the higher number of receivers than if using the lower number of receivers may provide for selecting the lower number of receivers since the energy consumption with the lower number of receivers still provides for a lower energy consumption, i.e. although taking a few more re-transmissions into account. For example, an energy estimation procedure may be used for determining whether performance gain of the higher number of receivers is so significant that the overall energy consumption for an amount of data is likely to be lower than when using the lower number of receivers. The energy estimation procedure may for example use a look-up table with values that have been provided by simulation and/or tests in advance. Alternatively, calculations may be performed using models adapted for applicable communication scenarios.

The usage of this algorithm with selection of antennas based on correlation can be tested by attaching signals with different correlation between the antennas and check what performance is achieved.

With this solution the UE capable of 4Rx (or more receivers in the general case, e.g. M receivers) will select the best two (or more receivers in the general case, e.g. N receivers where N<M) antenna ports to use for demodulation when it falls back to the fewer receiver antenna ports compared with a legacy selection including selecting one receiver out of 2 receivers i.e. that the UE only selects based on received power or received SNR on each receiver antenna. With this solution the performance of the combined receiver when using less than the number of available antennas can be improved.

As a further advantage, separate from the energy saving intentions, the solution also eases consideration on testing, i.e. for fulfilment tests of e.g. 3GPP specifications, since 2RX test cases can be reused with a 4RX UE implementation by splitting the two independent signals such that pairwise completely correlated signals are provided on arbitrary pairs of UE antenna ports. If the UE performs 2RX fallback when the test is being executed then it will automatically switch off receivers according to the correlation estimates, and hence it will make use of the two uncorrelated signals that the test equipment is generating. The approach also gives feasibility to be verified in the way of setting up proper correlation scenarios on Rx antenna ports if the UEs are implemented in the proposed way.

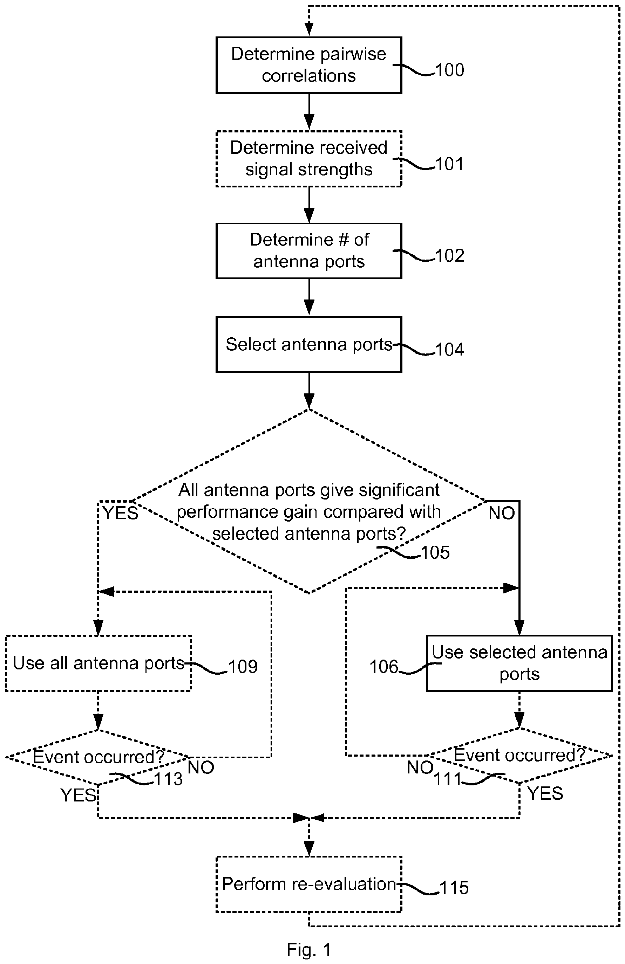

With this general discussion in mind, the approach will be demonstrated as a method of selecting operation antennas in a multiple input receiver having a plurality of antennas connected to respective antenna ports of the receiver with reference to Fig. 1 which is a flow chart illustrating methods according to embodiments.

Pairwise correlation of propagation channels among all of the available antenna ports is determined 100. Normally, received signal levels of the antenna ports are also determined 101, but this step is optional, i.e. if signal strength is not a part of the coming procedure steps, there is no reason for determining 101 the received signal levels at least for the antenna port usage selection. For example, when the correlations are determined 100 with high confidence on the correlation level, the antenna port selection can be performed without taking receive signal levels into account. However, the signal levels may be determined 101 also for other purposes of the multi-antenna operation, e.g. for equalizer operations in providing digitized signals and/or a composite signal for demodulation. Furthermore, the term signal level in this context should consider usable signal, e.g. the signal level may take signal-to-noise ratio (SNR) or signal-to-interference-and-noise ratio (SINR) into account to exclude noise and where possible also interference. A candidate first number of antenna ports to use for operation are determined 102. That is, the first number is an assumption of the lower number of antenna ports that may provide energy saving. Here, the candidate first number is normally 2 or higher, but less than the total number of available antenna ports. A special case may be that the first number is 1, but in that case, some of the special features demonstrated below will not be necessary, and that special case is not a part of the gist of the contribution by this disclosure, but the herein presented solution works also for that case. The determination of the first number may be made from a rule of fallback scenarios, e.g. determined from a look-up table, or from a function of parameters, e.g. including the total number of available antenna ports, feasible fallback number of antenna ports (e.g. defined by a standard), and correlation figures for the antenna ports determined in step 100, and possibly also received signal strength or signal quality for the respective antenna ports determined in step 101. The determination 102 may in some cases be a predetermined number, e.g. 2 antenna ports in a case where the total available antenna ports are 4. From the determined correlations and possibly also from the determined signal levels, the first number of antenna ports are selected 104. The selection 104 is made for example such that the ones with least determined mutual correlation are chosen. Alternatively, the selection 104 may be made such that antenna ports having low enough mutual correlation are chosen, e.g. having a mutual correlation below a threshold. The selection 104 may be influenced by the determined signal levels, e.g. selection is only made among antenna ports having a signal level above a power threshold, or the selection is made using correlations and signal levels weighted according to a model. That is, the signal level may to some degree be used as a sanity check of the signals of the antenna ports when making the selection 104 based on the mutual correlations. For example, consider a signal at an antenna port with close to zero signal level, i.e. real signal implying that there is only noise/interference. In that case that antenna port will have very low (zero) correlation with any of the other antenna ports. However, this antenna port should not be selected since it will not contribute. Still, the selection 104 is mainly based on the mutual correlations since this provides for the better collection of available information from the antenna ports, but when this information is questionable due to weak signal levels, some antenna ports may be disqualified. For a receiver in a 3GPP communication system, the signal level may be obtained from signal strength measured as reference symbol received power (RSRP) or reference symbol received quality (RSRQ), or from estimations made for obtaining SINR, channel quality indicator (CQI) or channel status information (CSI).

By the above demonstrated procedures, we now basically have two alternatives to consider: using all available antenna ports and using the selected antenna ports. These alternatives are considered 105, e.g. by evaluation 105 and the evaluation 105 may include judging whether the use of all available antenna ports provides such significant performance gain compared with the use of the selected antenna ports that it justifies the power consumption of operating all the receivers. This evaluation may be performed in different ways, e.g. as any of those suggested above. If the use of all available antenna ports does not give such significant performance gain compared with the use of the selected antenna ports, the alternative with the selected antenna ports is preferred, and the selected antenna ports are used 106 for the operation of the receiver. Power consumption is thereby reduced without reducing performance to the same degree. However, if the use of all available antenna ports gives such significant performance gain compared with the use of the selected antenna ports, the alternative with all of the available antenna ports is preferred, and all the available antenna ports are used 109 for the operation of the receiver. Energy consumption is thereby kept reasonable although power consumption may be temporarily high. The evaluation 105 may comprise an energy calculation operation where parameters of the current or estimated future situation are taken into account. Also, the determination 100 of candidate number of antenna ports may benefit from such calculation. The energy calculation operation may be based on a model taking the situation parameters into account to different degrees. The energy calculations may alternatively be made beforehand and the energy calculation operation includes accessing a look-up table having the pre-made calculations for different situations. Examples of situations to consider are power supply status (charging/connected to mains, high battery, low battery, ...), internal temperature of receiver, signal strength, mobility status, transmission mode (for transceiver case), data rate, discontinuous reception, propagation and/or radio environment, antenna status (shadowed, broken, faded, malfunctions, ...), memory/processing available, radio link monitoring performance (synchronization, etc.) The situations have different nature implying for example different update rate, e.g. on how likely the situation is to change fast/slow, if it changes depending on other situation or parameter, different requirements on (instant) performance, e.g. to increase data rate or coverage, reduce latency, etc., different requirements on energy or resource efficiency, e.g. low battery, low memory, processor load close to limit, etc.

Optionally, re-evaluation 115 of the most promising use of antenna ports is made. The re-evaluation 115 may be performed upon occurrence of an event. The occurrence may be checked 111, 113, and if the event has occurred, the re-evaluation 115 is made, which in practice means performing the procedure steps 100-106 again and based thereon performing either step 110 or step 112. The event may comprise one or more components. One component may be time, where for example a timer has expired or a scheduler indicates time for re-evaluation. One component may be that some communication parameter has changed, e.g. applied channel status (and the adaptations made accordingly), handover, or other parameter gained from measurements and/or network signalling. One component may be that mutual correlations of antenna ports have changed.

An example of an aggregate event is that the timer or scheduler indicates that a check for a change is to be made, and the receiver starts all receivers (if not already operating) such that correlations can be determined, and a controller determines whether correlation situation has changed since last evaluation. If there has been no change, at least no substantial change, the receiver returns to the present operation since no event is considered to have occurred. If there has been a substantial change, the procedure performs 115 the re-evaluation.

The determination of change of correlation may alternatively comprise determining whether mutual correlations of used antenna ports have increased, e.g. above a threshold, which would imply that less information is collected from the active antenna ports. In such case, the starting of all receivers for checking the change can be omitted.

The re-evaluation may include that a candidate second number of antenna ports are to be used, i.e. another number than the first number. This may for example be the case where a communication parameter has changed and it can be determined, e.g. from a look-up table, that for this communication parameter the second number of antenna ports is a promising alternative. An example may be a receiver having in total 8 antenna ports and is presently working with 2 antenna ports, i.e. the first number is 2. A change in communication parameters, e.g. a change of modulation and coding scheme, gives that it may be more promising to use 4 antenna ports. Re-evaluation 115 is thus performed, and step 102 includes setting the candidate number of antenna ports to 4, pairwise correlations are determined 100 and signal strengths may be determined 101 among the 8 antenna ports, and 4 antenna ports are selected based on those determinations. The two alternatives, i.e. using all 8 antenna ports or using the selected 4 antenna ports, are evaluated and the most promising is applied, similar as demonstrated above.

In the disclosure above, there has been formed one alternative to the use of all antenna ports and the two alternatives are evaluated in comparison with each other. The same principles may be applied by forming more than one alternative to the use of all antenna ports. The two or more alternatives are in such case evaluated together with the alternative of using all the antenna ports, wherein the most promising of the at least three alternatives are applied using the similar principles as demonstrated above. Consider for example the 8 antenna port example above. The steps 100-104 are performed in parallel (wherein steps 100 and 101 may be performed jointly) with one alternative with 4 candidate antenna ports and another alternative with 2 candidate antenna ports. The evaluation 105 then selects among the 8 antenna port alternative, the 4 antenna port alternative and the 2 antenna port alternative, and applies the most promising. Any other numbers are equally feasible and only system specifications and any possible practical implementation restrictions may be considered. It should also be noted that the case of having a single antenna port alternative may also be part of the evaluation 105 of alternatives among evaluation of one or more multiple antenna fallback alternatives.

Below, approaches for test coverage and applicability rules for a 4 RX capable UE is disclosed. Some explanations for the abbreviations used are shown below.

### Abbreviation Explanation

- WI: Work Item
- WID: Work Item Description
- RRM: Radio Resource Management
- RRL: Radio Resource Layer
- RF: Radio Frequency
- RAN: Radio Access Network
- CSI: Channel State Information
- RLM: Radio Link Monitoring
- REFSENS: Reference sensitivity
- AP: Antenna Port
- PDCCH: Physical Downlink Control Channel
- PCFICH: Physical Control Format Indicator Channel
- CDM: Code Division Multiplex
- FRC: Fixed Reference Channel
- DM: Demodulation
- RS: Reference Signal
- OFDMA: Orthogonal Frequency Division Multiple Access
- OCNG: OFDMA Channel Noise Generator
- Pm-dsg: Probability of missed downlink scheduling grant
- PDSCH: Physical Downlink Shared Channel
- R-ML: Reduced complexity Maximum Likelihood
- CCE: Control Channel Element
- FDD: Frequency Duplex Division
- EVA: Extended Vehicular A model
- ETU: Extended Typical Urban model
- TM: Transmission Mode
- MCS: Modulation and Coding Scheme
- QAM: Quadrature Amplitude Modulation

The test coverage and antenna connection were discussed in the general scope paper for 4Rx in R4-151972, "General scope of 4Rx feature on UE performance aspect", by Ericsson. In order to provide further progress, this disclosure provides more details on how to fulfil test coverage and define proper test applicability rule for 4Rx capable UE.

For test coverage and applicability rule for 4Rx capable UE, it is reasonable to assume that not every requirement defined in TS 36.133, v12.7.0, and TS 36.101, v12.7.0, will be duplicated as new requirements for a 4Rx capable UE. Based on such assumption, it is preferable to define clear applicability rules to aim for the following goals to be achieved
- Goal 1: Proper implementation of 4Rx can be guaranteed
- Goal 2: Proper test coverage can be fulfilled with proper test cases

The 1st goal could be achieved by defining proper performance requirements where substantial gains can be achieved by using 4Rx compared to 2 Rx. Opportunistic fall back to 2 Rx should not be allowed- otherwise it will fail the tests with less throughput.

For the 2nd goal to achieve proper test coverage, all the legacy requirements defined with 2Rx should be verified. The following rules may be considered
- Rule 1: If the test scenario defined for 4Rx is completely identical with the legacy test scenario defined with 2Rx, except the number of Rx ports and SNR/SINR requirements, then only the new tests defined with 4Rx need to be executed and the legacy tests with 2Rx could be skipped.
- Rule 2: If the test scenario defined for 4Rx is not completely identical with the legacy test scenario defined with 2Rx, except the number of Rx ports and SNR/SINR requirements, then both the new tests defined with 4Rx and the legacy tests with 2Rx need to be executed.
- Rule 3: If a test scenario defined for 2Rx does not have a corresponding 4Rx test scenario, the legacy tests with 2Rx need to be executed.

The above rules could be considered to apply to requirements including RRM (legacy tests with 2Rx), RLM (in case needed for 4Rx otherwise only legacy tests with 2Rx), UE demodulation (PDSCH, control channels) and CSI requirements for 4Rx capable UEs in order to achieve proper test coverage. For RF tests, corresponding may apply for test coverage and applicability rules.

It is suggested that above Rule 1 to Rule 3 may be applied to requirements including RRM (legacy tests with 2Rx), RLM (in case needed for 4Rx, otherwise only legacy tests with 2Rx), UE demodulation (PDSCH, control channels) and CSI requirements for 4Rx capable UEs in order to achieve proper test coverage.

As stated in the contribution R4-151972 discussed above, 4Rx could be taken as an optional feature for Rel-13 or earlier release as long as it's supported by RAN1 and RAN2 specifications. For RF requirements, 4Rx capable UEs only need to pass the requirements on the bands supported by such UEs with 4Rx capability. Hence, UEs may only need to declare such features on the supported band and pass the RF requirements accordingly.

It is further suggested, for RF requirements, that 4Rx capable UEs may declare 4Rx features on the supported band (e.g. per band) and pass the RF requirements accordingly.

For RLM (in case needed), UE demodulation and CSI requirements, where the test purposes are mainly to verify baseband features for 4Rx, analogous to other RLM tests, UE demodulation and CSI requirements may be defined as band agnostic. For 4Rx capable UEs, such requirements are only requested to be executed once from any supported band.

It is further suggested that, for any RLM test (in case needed), UE performance and CSI requirements defined with 4Rx may be band agnostic and are only requested to be executed once from any supported band.

Again, where substantial gains can be achieved by using 4Rx compared to 2 Rx, the opportunistic fall back to 2 Rx should not be allowed. Otherwise it will fail the tests.

It is further suggested, for any RLM test (in case needed), UE performance and CSI requirements defined with 4Rx may be specified such that no opportunistic fallback to 2 Rx is allowed in order to achieve the substantial gain of using 4 Rx.

Power consumption is taken as an important aspect for a 4Rx capable UE. In order to save power to better map a realistic deployment scenario, and in order to ensure 4Rx will be switched on during the tests, the input power level should be reconsidered compared to the legacy tests using Noc=-98dBm for the whole bandwidth. Since Rel-8 the power settings for UE performance tests were discussed and decided with one of the documents, e.g. the contribution R4-081046, "TP TS 36.101: Clause 8 and associated FRC", by Ericsson, pointing out that the Noc should be set as "REFSENS plus substantial margin and then divided by the number of subcarriers for a 15 kHz spacing". With 4Rx, a similar consideration should be made, such that a substantial margin beyond REFSENS, but still a reasonable power level, e.g. +6dB, and not too high power level, can be chosen to save power.

It is further suggested that the power level set for UE performance tests with 4 Rx should consider a substantial margin beyond REFSENS, e.g. + 6dB, in order to save power and to better map a realistic deployment scenario.

As the band specific REFSENS levels may be considered from RF side, such power level settings for UE performance tests may be chosen based on the outcome from RF side, similar to taking the highest REFSENS level among all bands as the baseline, when considering the general power level for UE performance tests.

It is further suggested that the power level set for UE performance tests with 4 Rx may be based on the outcome from RF side on the REFSENS level, e.g. by using the highest REFSENS level among all bands as the baseline when considering the general power level for UE performance tests.

It has been proposed to take 4Rx as an optional feature to be declared by UE and the signalling of supporting 4 layers 4x4 for TM3/4 and TM9/10 may be fixed in Rel-10, and RAN4 will only define tests in Rel-13 of 36.101. It is up to the UE on which release declared to pass the performance tests defined with 4Rx in Rel-13 of 36.101, possibly from Rel-10, but in order to make sure such Rel-13 requirements to be testable in RAN5 for earlier releases, UE RAN4 should inform RAN5 for the testability for such requirements. It is suggested, with 4Rx as an optional feature in Rel-13 and RAN4 defines UE performance requirements in 36.101, that it is up to the UE/chipsets to decide on which release to be declared to pass the performance tests defined with 4Rx in Rel-13 of 36.101, possibly from Rel-10.

It is further suggested to allow all Rel-13 4Rx requirements to be possible to be tested for earlier releases UEs, e.g. from Rel-10.

It is not deemed feasible to extend all existing UE performance tests from 2Rx to 4Rx. Hence, it's important to ensure all the legacy features will be tested properly by a 4Rx capable UE, without extensions of 4Rx. This may be done with only two of the four AP to be active, with equivalent performance as a 2 Rx capable UE. In order to limit complexity for conformance testing and to avoid UE specific test implementation, it is beneficial to specify how to connect the 4 APs in the legacy tests designed for 2 APs. In order to achieve an equivalent performance, one easy and feasible solution is to pick only 2 of the 4 APs to be connected to the SS from TEs for the legacy tests defined with 2 Rx.

It is suggested that, for 4 Rx capable UEs to perform legacy tests specified with 2 Rx, any 2 of the 4 Rx are connected.

The above suggested approaches for test coverage and applicability rules for a 4 RX capable UE provides one or more advantages in relation to backward compatibility management, technical feasibility, predicable behaviour, etc.

According to the above results, the correlated 4Rx has identical performance as 2Rx. Hence, it is proved to be a reliable approach to connect the antenna ports, in order for a 4Rx capable UE to perform legacy tests that are defined only for a 2Rx UE.

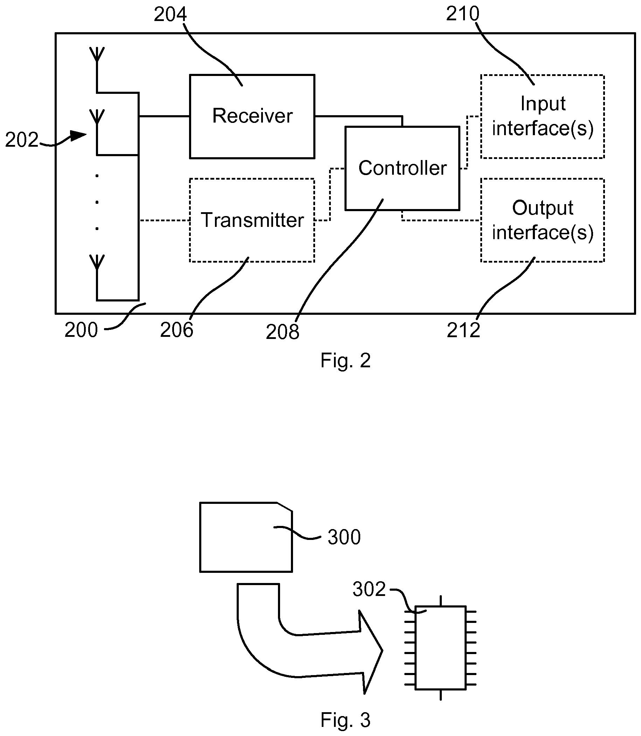

Fig. 2 is a block diagram schematically illustrating a receiver arrangement 200 according to an embodiment. The receiver arrangement 200, which may be a transceiver such as a UE, comprises an antenna arrangement 202, and a receiver 204 connected to the antenna arrangement 202. Optionally, the receiver arrangement may comprise a transmitter 206 connected to the antenna arrangement 202, which makes it a transceiver 200. A processing element is arranged to operate as a controller 208, which may comprise one or more circuits, for controlling at least operation of one or more of the antennas for reception according to any of the approaches demonstrated above. The arrangement 200 may further comprise one or more input interfaces 210 and one or more output interfaces 212. The interfaces 210, 212 can be user interfaces and/or signal interfaces, e.g. electrical or optical. The receiver arrangement 200 may be arranged to operate in a cellular communication network.

In particular, by the controller 208 being arranged to perform the embodiments demonstrated with reference to Fig. 1, the receiver 200 is capable of adapting use of antenna ports such that a fair balance between energy consumption and performance is achieved, and in particular for a current of estimated future situation. The controller 208 can also fulfil a multitude of tasks, ranging from signal processing to enable reception and transmission since it is connected to the receiver 204 and transmitter 206, executing applications, controlling the interfaces 210, 212, etc.

The methods according to the present invention is suitable for implementation with aid of processing means, such as computers and/or processors, especially for the case where the controller 208 demonstrated above comprises a processor handling adaptation of application of the antenna ports at the receiver 204. Therefore, there is provided computer programs, comprising instructions arranged to cause the processing means, processor, or computer to perform the steps of any of the methods according to any of the embodiments described with reference to Fig.1. The computer program preferably comprises program code which is stored on a computer readable medium 300, as illustrated in Fig. 3, which can be loaded and executed by a processing means, processor, or computer 302 to cause it to perform the methods, respectively, according to embodiments of the present invention, preferably as any of the embodiments described with reference to Figs 1. The computer 302 and computer program product 300 can be arranged to execute the program code sequentially where actions of the any of the methods are performed stepwise. The processing means, processor, or computer 302 is preferably what normally is referred to as an embedded system. Thus, the depicted computer readable medium 300 and computer 302 in Fig. 3 should be construed to be for illustrative purposes only to provide understanding of the principle, and not to be construed as any direct illustration of the elements.

## Claims

1. A method of selecting operation antennas in a multiple input receiver having a plurality of antennas connected to respective antenna ports of the receiver, the method comprising
entering a fallback reception state comprising using fewer antenna ports than the plurality of antenna ports to save energy by
determining (100) pairwise correlation of propagation channels among the plurality of antenna ports, respectively;
determining (102) a candidate first number of antenna ports to use for operation, wherein the candidate first number is less than a total number of available antenna ports for handling Multiple Input Multiple Output, MIMO, layers;
selecting (104) the first number of antenna ports among the plurality of antenna ports, wherein the selecting comprises selecting antenna ports based on mutual correlation among the plurality of antenna ports, and where less correlated antenna ports are selected before more correlated antenna ports; and
operating (106) the multiple input receiver using the selected first number of antenna ports,
**characterised in that**
the determination (102) of the number of antenna ports to use for operation includes performing an energy calculation operation, wherein the determination (102) is made such that energy consumption for an amount of data to be received is limited, based on one or more situation parameters, wherein the situation parameters include one or more of:
estimated overall capacity of a network in which the receiver operates;
requirements of service associated with reception; and
estimated fading.

2. The method of claim 1, wherein the selecting comprises selecting the antenna ports which have the least mutual correlation.

3. The method of claim 1, wherein the selecting comprises selecting antenna ports which have a mutual correlation below a threshold.

4. The method of any one of claims 1 to 3, wherein the determination (100) of pairwise correlation of propagation channels among the plurality of antenna ports includes operating using all of the plurality of the antenna ports during the determination.

5. The method of any one of claims 1 to 4, comprising
evaluating (105) whether operating with all of the plurality of antenna ports gives significant performance gain compared with the selected first number of antenna ports, wherein the selected first number of antenna ports is used if there is no significant performance gain from using all of the plurality of antenna ports, and
operating (109) the multiple input receiver using all of the plurality of antenna ports if there is significant gain from using all of the plurality of antenna ports.

6. The method of any one of claims 1 to 5, comprising
determining (101) received signal level on each of the plurality of antenna ports, respectively, wherein the selecting (104) comprises selecting antenna ports based on their respective received signal power, and the selecting (104) of antenna ports based on their respective received signal power comprises only selecting among antenna ports having a received signal power over a predetermined power threshold.

7. A multiple input receiver (200) having a plurality of antenna ports, wherein a plurality of antennas (202) are enabled to be connected to the antenna ports of the receiver, respectively, the receiver (200) being arranged to enter a fallback reception state comprising using fewer antenna ports than the plurality of antenna ports to save energy by comprising a controller (208) arranged to
a) determine pairwise correlation of propagation channels among the plurality of antenna ports, respectively;
b) determine a candidate first number of antenna ports to use for operation, wherein the candidate first number is less than a total number of available antenna ports for handling Multiple Input Multiple Output, MIMO, layers;
c) select the first number of antenna ports among the plurality of antenna ports, wherein the selection comprises to select antenna ports based on mutual correlation among the plurality of antenna ports, and where less correlated antenna ports are selected before more correlated antenna ports; and
d) operate the multiple input receiver by using the selected first number of antenna ports,
**characterised in that**
the determination of the number of antenna ports to use for operation includes that the controller performs an energy calculation operation, wherein the determination is made such that energy consumption for an amount of data to be received is limited, based on one or more situation parameters, wherein the situation parameters include one or more of:
estimated overall capacity of a network in which the receiver operates;
requirements of service associated with reception; and
estimated fading.

8. The receiver of claim 7, wherein the selection comprises to select the antenna ports which have the least mutual correlation.

9. The receiver of claim 7, wherein the selection comprises to select antenna ports which have a mutual correlation below a threshold.

10. The receiver of any one of claims 7 to 9, wherein the determination of pairwise correlation of propagation channels among the plurality of antenna ports includes that the controller operates all of the plurality of the antenna ports during the determination.

11. The receiver of any one of claims 7 to 10, wherein the controller is further arranged to determine received signal level on each of the plurality of antenna ports, respectively, wherein the selection comprises selection of antenna ports based on their respective received signal power, and the selection of antenna ports based on their respective received signal power comprises to only select among antenna ports having a received signal power over a predetermined power threshold.

12. The receiver of claim 11, wherein the selection of antenna ports includes a selection by the controller based on a weighted value of the mutual correlation and of the received signal power.

13. A communication device comprising a receiver according to any one of claims 7 to 12.

## Patentansprüche

1. Verfahren zum Auswählen von Betriebsantennen in einem Empfänger mit mehreren Eingängen mit einer Vielzahl von Antennen, die mit jeweiligen Antennenanschlüssen des Empfängers verbunden sind, wobei das Verfahren umfasst
Eintreten in einen Fallback-Empfangsstatus, der Verwendung weniger Antennenanschlüsse als die Vielzahl von Antennenanschlüssen umfasst, um Energie zu sparen, durch
Bestimmen (100) paarweiser Korrelation von Ausbreitungskanälen jeweils unter der Vielzahl von Antennenanschlüssen;
Bestimmen (102) einer ersten Kandidatenanzahl von Antennenanschlüssen zur Verwendung für Betrieb, wobei die erste Kandidatenanzahl kleiner ist als eine Gesamtzahl verfügbarer Antennenanschlüsse für Handhabung von MIMO-Schichten (Multiple Input Multiple Output Schichten);
Auswählen (104) der ersten Anzahl von Antennenanschlüssen aus der Vielzahl von Antennenanschlüssen, wobei das Auswählen Auswählen von Antennenanschlüssen basierend auf gegenseitiger Korrelation unter der Vielzahl von Antennenanschlüssen umfasst, und wobei weniger korrelierte Antennenanschlüsse vor stärker korrelierten Antennenanschlüssen ausgewählt werden; und
Betreiben (106) des Empfängers mit mehreren Eingängen unter Verwendung der ausgewählten ersten Anzahl von Antennenanschlüssen,
**dadurch gekennzeichnet, dass**
die Bestimmung (102) der Anzahl von Antennenanschlüssen zur Verwendung für Betrieb Durchführen einer Energieberrechnungsoperation beinhaltet, wobei die Bestimmung (102) derart durchgeführt wird, dass Energieverbrauch für eine zu empfangende Datenmenge begrenzt ist, basierend auf einem oder mehreren Situationsparametern, wobei die Situationsparameter eines oder mehreres beinhalten von:
geschätzte Gesamtkapazität eines Netzwerks, in dem der Empfänger arbeitet;
Anforderungen an den Dienst, die Empfang zugeordnet sind; und
geschätztes Fading.

2. Verfahren nach Anspruch 1, wobei das Auswählen Auswählen der Antennenanschlüsse umfasst, die die geringste gegenseitige Korrelation aufweisen.

3. Verfahren nach Anspruch 1, wobei das Auswählen Auswählen von Antennenanschlüssen umfasst, die eine gegenseitige Korrelation unter einem Schwellenwert aufweisen.

4. Verfahren nach einem der Ansprüche 1 bis 3, wobei die Bestimmung (100) paarweiser Korrelation von Ausbreitungskanälen unter der Vielzahl von Antennenanschlüssen Betrieb unter Verwendung aller der Vielzahl von Antennenanschlüssen während der Bestimmung beinhaltet.

5. Verfahren nach einem der Ansprüche 1 bis 4, umfassend
Auswerten (105), ob Betrieb mit allen der Vielzahl von Antennenanschlüssen einen signifikanten Leistungsgewinn im Vergleich zu der ausgewählten ersten Anzahl von Antennenanschlüssen bringt, wobei die ausgewählte erste Anzahl von Antennenanschlüssen verwendet wird, wenn kein signifikanter Leistungsgewinn aus Verwendung aller der Vielzahl von Antennenanschlüssen vorliegt, und
Betreiben (109) des Empfängers mit mehreren Eingängen unter Verwendung aller der Vielzahl von Antennenanschlüssen, wenn signifikanter Gewinn aus Verwendung aller der Vielzahl von Antennenanschlüssen vorliegt.

6. Verfahren nach einem der Ansprüche 1 bis 5, umfassend
Bestimmen (101) des empfangenen Signalpegels jeweils an jedem der Vielzahl von Antennenanschlüssen, wobei das Auswählen (104) Auswählen von Antennenanschlüssen basierend auf ihrer jeweiligen empfangenen Signalleistung umfasst, und das Auswählen (104) der Antennenanschlüsse basierend auf ihrer jeweiligen empfangenen Signalleistung nur Auswählen unter Antennenanschlüssen mit einer empfangenen Signalleistung über einem vorbestimmten Leistungsschwellenwert umfasst.

7. Empfänger mit mehreren Eingängen (200) mit einer Vielzahl von Antennenanschlüssen, wobei eine Vielzahl von Antennen (202) befähigt ist, jeweils mit den Antennenanschlüssen des Empfängers verbunden zu werden, wobei der Empfänger (200) angeordnet ist, in einen Fallback-Empfangszustand einzutreten, der Verwendung weniger Antennenanschlüsse als die Vielzahl von Antennenanschlüssen umfasst, um Energie zu sparen durch Umfassen einer Steuerung (208), die angeordnet ist für
a) Bestimmen paarweiser Korrelation von Ausbreitungskanälen jeweils unter der Vielzahl von Antennenanschlüssen;
b) Bestimmen einer ersten Kandidatenanzahl von Antennenanschlüssen zur Verwendung für Betrieb, wobei die erste Kandidatenanzahl kleiner ist als eine Gesamtzahl verfügbarer Antennenanschlüsse für Handhabung von MIMO-Schichten (Multiple Input Multiple Output Schichten);
c) Auswählen der ersten Anzahl von Antennenanschlüssen aus der Vielzahl von Antennenanschlüssen, wobei das Auswählen Auswählen von Antennenanschlüssen basierend auf gegenseitiger Korrelation unter der Vielzahl von Antennenanschlüssen umfasst, und wobei weniger korrelierte Antennenanschlüsse vor stärker korrelierten Antennenanschlüssen ausgewählt werden; und
d) Betreiben des Empfängers mit mehreren Eingängen unter Verwendung der ausgewählten ersten Anzahl von Antennenanschlüssen,
**dadurch gekennzeichnet, dass**
die Bestimmung der Anzahl von Antennenanschlüssen zur Verwendung für Betrieb beinhaltet, dass die Steuerung eine Energieberrechnungsoperation durchführt, wobei die Bestimmung derart durchgeführt wird, dass Energieverbrauch für eine zu empfangende Datenmenge begrenzt ist, basierend auf einem oder mehreren Situationsparametern, wobei die Situationsparameter eines oder mehreres beinhalten von:
geschätzter Gesamtkapazität eines Netzwerks, in dem der Empfänger arbeitet;
Anforderungen an den Dienst, die Empfang zugeordnet sind; und
geschätztes Fading.

8. Empfänger nach Anspruch 7, wobei die Auswahl Auswählen der Antennenanschlüsse umfasst, die die geringste gegenseitige Korrelation aufweisen.

9. Empfänger nach Anspruch 7, wobei das Auswählen Auswählen von Antennenanschlüssen umfasst, die eine gegenseitige Korrelation unter einem Schwellenwert aufweisen.

10. Empfänger nach einem der Ansprüche 7 bis 9, wobei die Bestimmung paarweiser Korrelation von Ausbreitungskanälen unter der Vielzahl von Antennenanschlüssen beinhaltet, dass die Steuerung alle der Vielzahl von Antennenanschlüssen während der Bestimmung betreibt.

11. Empfänger nach einem der Ansprüche 7 bis 10, wobei die Steuerung weiter dafür angeordnet ist, einen empfangenen Signalpegel jeweils an jedem der Vielzahl von Antennenanschlüssen zu bestimmen, wobei die Auswahl Auswahl von Antennenanschlüssen basierend auf ihrer jeweiligen empfangenen Signalleistung umfasst, und die Auswahl der Antennenanschlüsse basierend auf ihrer jeweiligen empfangenen Signalleistung nur Auswählen unter Antennenanschlüssen mit einer empfangenen Signalleistung über einem vorbestimmten Leistungsschwellenwert umfasst.

12. Empfänger nach Anspruch 11, wobei die Auswahl von Antennenanschlüssen eine Auswahl durch die Steuerung basierend auf einem gewichteten Wert der gegenseitigen Korrelation und der empfangenen Signalleistung beinhaltet.

13. Kommunikationsvorrichtung, die einen Empfänger nach einem der Ansprüche 7 bis 12 umfasst.

## Revendications

1. Procédé de sélection d'antennes opérationnelles dans un récepteur à entrées multiples présentant une pluralité d'antennes connectées à des ports d'antenne respectifs du récepteur, le procédé comprenant
l'application en entrée d'un état de réception de repli comprenant l'utilisation de moins de ports d'antenne que la pluralité de ports d'antenne pour économiser de l'énergie par
la détermination (100) d'une corrélation par paire de canaux de propagation respectivement parmi la pluralité de ports d'antenne ;
la détermination (102) d'un premier nombre candidat de ports d'antenne à utiliser pour le fonctionnement, dans lequel le premier nombre candidat est inférieur à un nombre total de ports d'antenne disponibles pour la gestion de couches à entrées multiples et sorties multiples, MIMO ;
la sélection (104) du premier nombre de ports d'antenne parmi la pluralité de ports d'antenne, dans lequel la sélection comprend la sélection de ports d'antenne sur la base d'une corrélation mutuelle parmi la pluralité de ports d'antenne, et où moins de ports d'antenne corrélés sont sélectionnés avant plus de ports d'antenne corrélés ; et
le fait de faire fonctionner (106) le récepteur à entrées multiples en utilisant le premier nombre sélectionné de ports d'antenne,
**caractérisé en ce que**
la détermination (102) du nombre de ports d'antenne à utiliser pour le fonctionnement inclut l'exécution d'une opération de calcul d'énergie, dans lequel la détermination (102) est effectuée de manière qu'une consommation d'énergie pour une quantité de données à recevoir soit limitée, sur la base d'un ou plusieurs paramètres de situation, dans lequel les paramètres de situation incluent un ou plusieurs parmi :
une capacité globale estimée d'un réseau dans lequel le récepteur fonctionne ;
des exigences de service associées à la réception ; et
un évanouissement estimé.

2. Procédé selon la revendication 1, dans lequel la sélection comprend la sélection des ports d'antenne qui présentent la moindre corrélation mutuelle.

3. Procédé selon la revendication 1, dans lequel la sélection comprend la sélection de ports d'antenne qui présentent une corrélation mutuelle au-dessous d'un seuil.

4. Procédé selon l'une quelconque des revendications 1 à 3, dans lequel la détermination (100) d'une corrélation par paire de canaux de propagation parmi la pluralité de ports d'antenne inclut le fonctionnement en utilisant toute la pluralité des ports d'antenne durant la détermination.

5. Procédé selon l'une quelconque des revendications 1 à 4, comprenant
l'évaluation (105) si le fonctionnement avec toute la pluralité des ports d'antenne donne un gain de performance significatif par rapport au premier nombre sélectionné de ports d'antenne, dans lequel le premier nombre sélectionné de ports d'antenne est utilisé s'il n'existe aucun gain de performance significatif provenant de l'utilisation de toute la pluralité des ports d'antenne, et
le fait de faire fonctionner (109) le récepteur à entrées multiples en utilisant toute la pluralité des ports d'antenne s'il existe un gain significatif provenant de l'utilisation de toute la pluralité des ports d'antenne.

6. Procédé selon l'une quelconque des revendications 1 à 5, comprenant
la détermination (101) d'un niveau de signal reçu sur chacun de la pluralité des ports d'antenne, respectivement, dans lequel la sélection (104) comprend la sélection de ports d'antenne sur la base de leur puissance de signal reçu respective, et la sélection (104) de ports d'antenne sur la base de leur puissance de signal reçu respective comprend seulement la sélection parmi des ports d'antenne présentant une puissance de signal reçu au-dessus d'un seuil de puissance prédéterminé.

7. Récepteur à entrées multiples (200) présentant une pluralité de ports d'antenne, dans lequel une pluralité d'antennes (202) sont activées pour être connectées respectivement aux ports d'antenne du récepteur, le récepteur (200) étant agencé pour passer dans un état de réception de repli comprenant l'utilisation de moins de ports d'antenne que la pluralité de ports d'antenne pour économiser de l'énergie en comprenant un contrôleur (208) agencé pour
a) déterminer une corrélation par paire de canaux de propagation respectivement parmi la pluralité de ports d'antenne ;
b) déterminer un premier nombre candidat de ports d'antenne à utiliser pour le fonctionnement, dans lequel le premier nombre candidat est inférieur à un nombre total de ports d'antenne disponibles pour la gestion de couches à entrées multiples et sorties multiples, MIMO ;
c) sélectionner le premier nombre de ports d'antenne parmi la pluralité de ports d'antenne, dans lequel la sélection comprend la sélection de ports d'antenne sur la base d'une corrélation mutuelle parmi la pluralité de ports d'antenne, et où moins de ports d'antenne corrélés sont sélectionnés avant plus de ports d'antenne corrélés ; et
d) faire fonctionner le récepteur à entrées multiples en utilisant le premier nombre sélectionné de ports d'antenne,
**caractérisé en ce que**
la détermination du nombre de ports d'antenne à utiliser pour le fonctionnement inclut que le contrôleur effectue une opération de calcul d'énergie, dans lequel la détermination est effectuée de manière qu'une consommation d'énergie pour une quantité de données à recevoir soit limitée, sur la base d'un ou plusieurs paramètres de situation, dans lequel les paramètres de situation incluent un ou plusieurs parmi :
une capacité globale estimée d'un réseau dans lequel le récepteur fonctionne ;
des exigences de service associées à la réception ; et
un évanouissement estimé.

8. Récepteur selon la revendication 7, dans lequel la sélection comprend la sélection des ports d'antenne qui présentent la moindre corrélation mutuelle.

9. Récepteur selon la revendication 7, dans lequel la sélection comprend la sélection de ports d'antenne qui présentent une corrélation mutuelle au-dessous d'un seuil.

10. Récepteur selon l'une quelconque des revendications 7 à 9, dans lequel la détermination d'une corrélation par paire de canaux de propagation parmi la pluralité de ports d'antenne inclut que le contrôleur fait fonctionner toute la pluralité des ports d'antenne durant la détermination.

11. Récepteur selon l'une quelconque des revendications 7 à 10, dans lequel le contrôleur est agencé en outre pour déterminer un niveau de signal reçu sur chacun de pluralité des ports d'antenne, respectivement, dans lequel la sélection comprend la sélection de ports d'antenne sur la base de leur puissance de signal reçu respective, et la sélection de ports d'antenne sur la base de leur puissance de signal reçu respective comprend seulement la sélection parmi des ports d'antenne présentant une puissance de signal reçu au-dessus d'un seuil de puissance prédéterminé.

12. Récepteur selon la revendication 11, dans lequel la sélection de ports d'antenne inclut une sélection par le contrôleur sur la base d'une valeur pondérée de la corrélation mutuelle et de la puissance de signal reçu.

13. Dispositif de communication comprenant un récepteur selon l'une quelconque des revendications 7 à 12.
